# EUROPEAN PATENT APPLICATION

(11) **EP 1 993 214 A1**
(43) Date of publication of application: **19.11.2008**
(21) Application number: 07714343.6
(22) Date of filing: 16.02.2007
(51) Int. Cl.: H04B 1/713, H04J 11/00

(54) **RADIO COMMUNICATION DEVICE AND RADIO COMMUNICATION METHOD**

(30) Priority: 03.03.2006 JP 2006058465
(71) Applicant: Sony Corporation, Minato-ku Tokyo 108-0075 (JP)
(72) Inventor: YAMASUGE, Hiroyuki, Tokyo 141-0001 (JP)
(74) Representative: Thévenet, Jean-Bruno
(86) International application number: PCT/JP2007/052813
(87) International publication number: WO 2007/099785

(57) **Abstract**

Transmission data spread over a frequency domain and a time domain is efficiently received. When a spread signal is received, if the SNR exceeds a predetermined value, it is determined that a despreading process is not necessary for all blocks, and a block selection flow is started. If a block having a channel estimation result indicating that a decoding process is possible without despreading is present, only that block is subjected to the decoding process, and despreading processes over the frequency domain and time domain are terminated. Moreover, when decoding is performed by despreading only some of the blocks, the despreading process over the frequency domain is preferentially performed so as to efficiently terminate FFT with regard to the spread signal over the time domain for which despreading is not performed.

## Description

### Technical Field

The present invention relates to a wireless communication apparatus and wireless communication method that use an OFDM modulation scheme and that perform UWB communication in which a transmission signal is spread over a wide band, and more specifically to an MB-OFDM-based wireless communication apparatus and wireless communication method that perform a reception process of transmission data spread over the frequency domain and the time domain.

### Background Art

Recently, a wireless communication scheme that allows high-speed transmission at a speed higher than or equal to 100 Mbps using a very wide frequency band, called "ultra wideband (UWB) communication", has attracted attention. For example, in the U.S., spectral mask for UWB was specified by the FCC (Federal Communications Commission), and, in indoor environments, UWB transmission can be performed at a band of 3.1 GHz to 10.6 GHz. UWB communication allows high-speed wireless transmission in spite of, due to its transmission power, a wireless communication scheme designed for near-field applications. Thus, a PAN (Personal Area Network) with a communication range of about 10 m is assumed, and UWB communication is expected to be put into practice as a wireless communication system implementing near-field ultra high-speed transmission.

For example, in the IEEE 802.15.3 Standard Board, a data transmission scheme with a packet structure including a preamble has been developed as an access control scheme for UWB communication. In this Board, a DSSS (Direct Sequence Spread Spectrum)-UWB scheme with the spreading speed of a DS (DirectSpread) information signal having been increased to the maximum limit, and an OFDM_UWB scheme employing an OFDM modulation scheme were defined as UWB transmission schemes, and trials of the respective schemes are being carried out. According to OFDM (Orthogonal Frequency Division Multiplexing) transmission, it is possible to avoid reduction in the transmission quality caused by phasing of radio signals and to realize high-speed high-quality wireless transmission.

For the latter OFDM_UWB scheme, a multi-band scheme (hereinafter referred to as an "MB-OFDM scheme") in which a band of 3.1 GHz to 10.6 GHz, which was specified by the FCC, is divided into a plurality of subbands each having a bandwidth of 528 MHz and in which frequency hopping (FH) is performed between the subbands has been examined. According to the FH scheme, communication may fail due to the effects from other systems, but communication is not substantially interrupted because the frequency is constantly changing. That is, coexistence with other systems is possible, and high phasing resistance and easy scalability are achieved.

Moreover, as another UWB application, a wireless version of USB (Universal Serial Bus), which has been widely used as a general-purpose interface for personal computers, i.e., "Wireless UWB", has been examined. Since UWB is a near-field large-capacity wireless communication scheme, high-speed data transmission in an ultra-short-range area such as an ultra-high-speed near-field DAN (Device Area Network) including a storage device can be realized. For example, a mobile digital device, such as a digital camera or a music player, and a television set or a personal computer can be wirelessly connected within a short range to transfer a large capacity of data such as a moving image or music data of a CD at a high speed for a short time. Wireless USB utilizes the MB-OFDM scheme as a communication scheme (Phy layer and MAC layer).

Currently, with regard to the MB-OFDM scheme, the content of discussion in the IEEE 802.15.3 TG 3a substantially directly corresponds to the ECMA (European Computer Manufacturer Association) standard, and the standard specification of the PHY layer and MAC layer in a UWB communication system is described in ECMA-368 (see, for example, Non-Patent Document 1).

According to this standard specification, MB-OFDM communication systems employ a communication scheme in which transmission data is spread over the frequency domain and the time domain. The term "spread" as used herein means that the transmission of the same data is performed a plurality of times using a plurality of spread positions (hereinafter also referred to as "blocks") on the frequency domain and the time domain. In OFDM transmission, two-dimensional spreading in the frequency domain and time domain directions would optimize a spreading factor according to the line state, resulting in optimum performance (see, for example, Patent Document 1). Moreover, on the receiving side, superposition of the same data received the plurality of times allows an improvement in SNR (Signal-to-Noise Ratio).

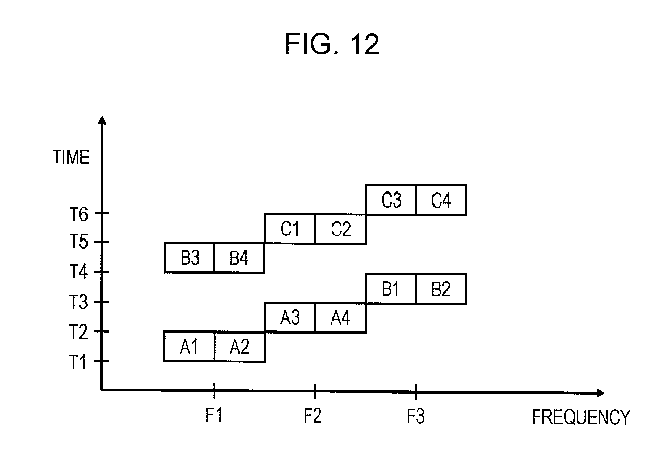

Fig. 12 illustrates a mechanism of data communication based on such a spreading scheme. Three subbands (frequency channels) having center frequencies F1, F2, and F3 are provided on the frequency domain, and frequency hopping is performed between the subbands in a round robin fashion for each OFDM symbol. Further, when viewed on the time domain, OFDM signals are transmitted at predetermined transmission timings T1, T2, T3, ... .

One OFDM symbol is divided into two blocks at the center frequency thereof, and the same data is transmitted using the first half and second half blocks. For example, A1 and A2, which are carried on the first half and second half portions of an OFDM symbol transmitted over the subband having the center frequency F1 at the time T1, represent the same data, data A. The same data is further transmitted using two consecutive OFDM symbols. Thus, A3 and A4, which are carried on the first half and second half blocks of an OFDM symbol transmitted over the subband having the center frequency F2 at the time T2, represent the data A, which is the same as A1. The sending of the data A two times using the first half and second half portions of one OFDM symbol means that the same data is sent a plurality of times at different spread positions on the frequency domain, and thus corresponds to "Frequency Domain Spreading (FDS)". Further, the sending of the data A over two consecutive OFDM symbols means that the same data is sent a plurality of times at different spread positions on the time domain, and thus corresponds to "Time Domain Spreading (TDS)". The same applies to other blocks B1 to B4 and C1 to C4.

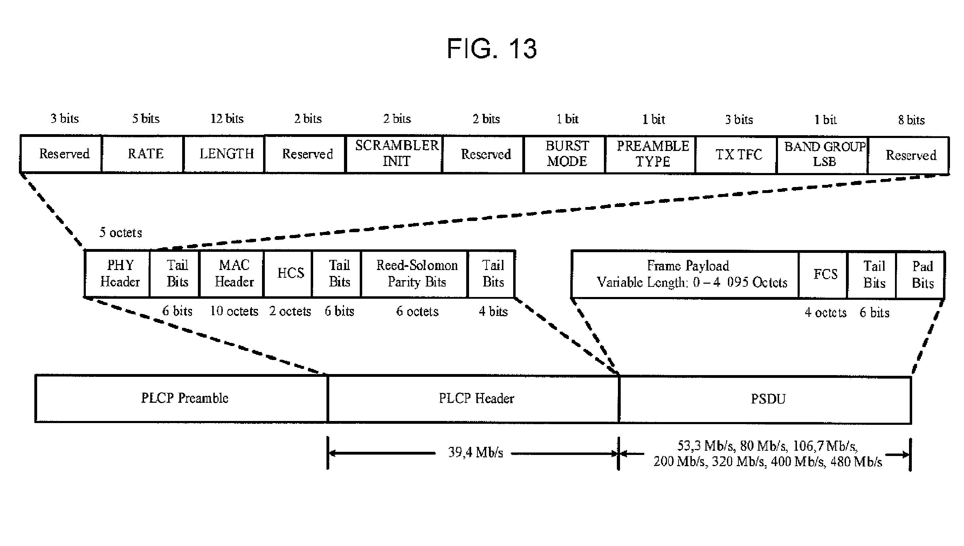

Meanwhile, in Stored-and-Forward-Switching communication systems, packet communication in which transmission data is assembled into transmission units called packets and is then sent and received between communication stations is generally adopted. A packet is basically composed of a preamble formed of a known training sequence for finding a packet or acquiring a synchronization timing, a PLCP (Physical Layer Convergence Protocol) header as a Phy header, and a PSDU (Physical Layer Service Data Unit) as a Phy payload. Fig. 13 shows an example format of a packet (Phy frame). As shown in the figure, the PLCP header includes important information such as a MAC header and a Phy header.

According to the ECMA standard specification, a plurality of data rates such as 53.3 Mbps, 80 Mbps, 106.7 Mbps, 160 Mbps, 200 Mbps, 320 Mbps, 400 Mbps, and 480 Mbps are specified, and the number of times data to be sent is spread is specified to be four for 53.3 Mbps to 80 Mbps, two for 106.7 Mbps to 200 Mbps, and one for 320 Mbps to 480 Mbps. Link adaptation in which a data rate, a coding rate, and a modulation scheme are adaptively set, together with the number of times data is spread, according to the communication state etc., is possible. However, it is specified that the PLCP header portion describing important information for packet transmission be delivered at the lowest data rate (53.3 Mbps) regardless of the communication environment and is also specified that the data to be sent be spread over the frequency domain and the time domain in order to improve the SNR.

**[Table 1]**

| Data Rate (Mb/s) | Modulation | Coding Rate (*R*) | FDS | TDS | Coded Bits / 6 OFDM Symbol (N_{CBP6S}) | Info Bits / 6 OFDM Symbol (N_{IBP6S}) |
|---|---|---|---|---|---|---|
| 53.3 | QPSK | 1/3 | YES | YES | 300 | 100 |
| 80 | QPSK | 1/2 | YES | YES | 300 | 150 |
| 106,7 | QPSK | 1/3 | NO | YES | 600 | 200 |
| 160 | QPSK | 1/2 | NO | YES | 600 | 300 |
| 200 | QPSK | 5/8 | NO | YES | 600 | 375 |
| 320 | DCM | 1/2 | NO | NO | 1200 | 600 |
| 400 | DCM | 5/8 | NO | NO | 1200 | 750 |
| 480 | DCM | 3/4 | NO | NO | 1200 | 900 |

If frequency domain spreading and time domain spreading are performed to improve the SNR even though the communication environment is good, communication characteristics are excessively improved, which is in itself not a problem. However, performing the reception of the spread signal and a despreading process on the receiver side would introduce a further problem in that power consumption increases more than necessary.

Moreover, also in Wireless USB, it is specified that a payload portion of a control packet called MMC (Micro-scheduled Management Commands) be sent and received at a low data rate regardless of the communication environment and that data be spread over the frequency domain and the time domain in order to improve the SNR, which has a problem similar to that described above.

Patent Document 1: Japanese Unexamined Patent Application Publication No. 2002-190788
Non-Patent Document 1: http://www.ecma-international.org/publications/standards/Ecma-368.htm

### Disclosure of Invention

### Technical Problem

It is an object of the present invention to provide a superior MB-OFDM-based wireless communication apparatus and wireless communication method in which a reception process of transmission data spread over the frequency domain and the time domain can be efficiently performed.

It is a further object of the present invention to provide a superior wireless communication apparatus and wireless communication method in which, as with a PLCP header portion of a Phy frame in MB-OFDM communication or a payload portion of an MMC in Wireless USB, a reception process can be efficiently performed, with reduced power consumption, on data to be sent and received at a low data rate regardless of the communication environment by performing a spreading process over the frequency domain and the time domain.

### Technical Solution

The present invention has been made in view of the foregoing problem, and provides a wireless communication apparatus that performs a reception process of a transmission signal in which data to be sent was spread into a plurality of blocks over a frequency domain or a time domain, characterized by including a reception processing unit that performs a reception process of a spread signal; a channel estimation and SNR estimation unit that performs channel estimation and SNR estimation of a received signal; a despreading unit that performs despreading of the received signal; a decoding unit that performs a decoding process of the received signal which has passed through the despreading unit; and a control unit that controls operation of the despreading unit and the reception processing unit on the basis of channel estimation and SNR estimation results.

UWB communication using a very wide frequency band is expected as a wireless communication system implementing near-field ultra high-speed transmission, and is being standardized. For example, in an OFDM_UWB communication system, a spread data communication scheme in which the same data is transmitted a plurality of times using a plurality of positions on the frequency domain and the time domain has been employed. According to such a data transmission scheme, on the receiving side, superposition of received spread signals allows an improvement in SNR.

However, if frequency domain spreading and time domain spreading are performed even in a good communication environment, performing a reception process of a spread signal a plurality of times on the receiver side has no problem in improving the SNR; however, although communication characteristics are excessively improved, which is in itself not a problem, power consumption increases more than necessary, which may cause a problem.

For example, it is specified that a PLCP header portion of a Phy frame in MB-OFDM communication or a payload portion of an MMC in Wireless USB be subjected to frequency domain spreading and time domain spreading regardless of the communication environment. In a good communication environment, a receiver performs a despreading process on those spread signals although it is possible to perform a reception process with data at one time, resulting in power consumption being increased more than necessary.

A wireless communication apparatus according to the present invention, on the other hand, is configured to select, when a reception process of an MB-OFDM signal is performed, turning on/off of despreading over the frequency domain and despreading over the time domain on the basis of a channel estimation value and an SNR estimation value using the preamble portion of a packet. That is, when an estimated SNR value exceeds a certain value, a block selection processing flow for turning off the despreading is started. By terminating an unnecessary despreading process, therefore, power consumption can be reduced.

As shown in Fig. 12, in a case where the same data is sent a plurality of times using a plurality of blocks on a two-dimensional space determined by the frequency domain and the time domain, due to different bands being used, individual blocks suffer from different phasing effects. Accordingly, as a block selection method, one or two blocks with good characteristics are selected from among a plurality of blocks over which the same data has been spread. Then, no despreading process is performed in a time zone other than that of the selected block or blocks, and the operation of the corresponding circuit is terminated. Thus, a reduction in power consumption can be realized.

When a spread signal is received, first, the control unit determines, based on the SNR estimation result, whether or not a despreading process of the received signal by using the despreading unit is necessary. When the SNR is below a predetermined value, in order to achieve an improvement in SNR, it is determined that the despreading process is necessary for all blocks that have been two-dimensionally spread over the frequency domain and the time domain, and the despreading unit is activated. When the SNR exceeds the predetermined value, on the other hand, it is determined that the despreading process is not necessary for all the blocks, and furthermore a block selection flow for selecting a block for which the decoding process or the spreading process is performed on the basis of a channel estimation result of each of the blocks is started.

In this block selection, the control unit discriminates whether or not a block having a channel estimation result indicating that the decoding process is possible without despreading is present among a plurality of blocks over which the same data has been spread. For example, for each block of an FFT-output OFDM symbol, based on whether or not a channel estimation result indicates that the number (or the ratio) of sub-carriers exceeding a first threshold value is greater than or equal to a predetermined value, it can be determined whether or not the decoding process is possible without despreading. Then, if a block having a good channel estimation result is present, the despreading process in the despreading unit is terminated and only this block is subjected to the decoding process in the decoding unit. Performing a decoding process on only one block means that the despreading processes over both the frequency domain and time domain are terminated.

Further, if a block for which the decoding process is possible without despreading is not present in the received spread signal, the control unit subsequently discriminates whether or not a block having a channel estimation result indicating that the decoding process is possible by performing despreading together with some other blocks is present. Then, once the presence of such some blocks has been able to be confirmed, the despreading process is performed on only those some blocks and the decoding process in the decoding unit is performed. For a block not to be used, the corresponding circuit is terminated. Thus, a reduction in power consumption can be achieved.

For example, if a block having a channel estimation result indicating that a sub-carrier exceeding the first threshold value is not included but the number (or the ratio) of sub-carriers exceeding a second threshold value that is lower than the first threshold value is greater than or equal to the predetermined value is present, it can be determined that the decoding process is possible by subjecting only those some blocks to the despreading process to achieve an improvement in SNR.

Furthermore, the wireless communication apparatus according to the present invention also terminates, for a block for which the despreading process has been terminated by block selection, the operation of an RF analog processing unit or an AD converter or a digital processing circuit portion such as an FFT or a channel correction circuit. Thus, the effects of low power consumption can further be improved. For example, with regard to an OFDM symbol for which the decoding process is not performed, the operation of the FFT or the channel correction circuit can be terminated. Moreover, for a block portion for which the decoding process or the despreading process is not performed within an OFDM symbol, the channel correction circuit can be terminated.

For example, in a case where the despreading process is terminated and the decoding process is performed on only one block, for an OFDM symbol portion that is not decoded, the FFT and the channel correction circuit can be terminated. Moreover, for a block that is not decoded within that OFDM symbol, the channel correction circuit can be terminated.

Furthermore, when, using the block selection described above, only some of a plurality of blocks over which the same data has been spread are despread and decoded, the control unit preferentially performs the despreading process over the frequency domain. Thus, FFT can efficiently be terminated for a spread signal over the time domain for which the despreading is not performed, and the low-power-consumption effects can be improved.

As shown in Fig. 12, in a communication scheme in which one OFDM symbol is composed of a plurality of blocks and in which spreading over the frequency domain has been performed by transmitting the same data using all the blocks within the OFDM symbol while spreading over the time domain has been performed by transmitting the same data using two or more consecutive OFDM symbols, first, the control unit discriminates whether or not each block within an FFT-output OFDM symbol has a channel estimation result indicating that the decoding process is possible by performing despreading together with some other blocks, that is, whether or not the decoding process is possible by performing the despreading process only within that OFDM symbol. Then, if the decoding process is possible by performing the despreading process only within the OFDM symbol, the despreading process is performed on the blocks within the OFDM symbol and then the decoding process in the decoding unit is performed. This corresponds to a block selection operation in which despreading over the frequency domain is turned on while despreading over the time domain is turned off. In such a case, the control unit terminates operation of the FFT and the channel correction circuit with regard to an OFDM symbol for which the despreading process is not performed, and can obtain higher low-power-consumption effects.

On the other hand, in a case where blocks within one OFDM symbol are not sufficient to collect good channel estimation results and it is determined that the decoding process is not possible, because of insufficient improvement in SNR, even if the despreading process is performed, the control unit searches for a block having a channel estimation result indicating that the decoding process is possible by performing despreading together with some other blocks over two or more OFDM symbols subjected to spreading over the time domain. Then, some blocks satisfying such a channel estimation result are collected between those OFDM symbols and the despreading process is performed to improve the SNR. Then, the decoding process in the decoding unit is performed. This corresponds to a block selection operation in which despreading over the frequency domain is turned off while despreading over the time domain is turned on. In this case, it is necessary to extract a block to be used for despreading from the respective OFDM symbols. Thus, FFT cannot be terminated. With regard to a block for which the despreading process is not performed, however, the operation of the channel correction circuit can be terminated. Advantageous Effects

According to the present invention, a superior MB-OFDM-based wireless communication apparatus and wireless communication method in which a reception process of transmission data spread over the frequency domain and the time domain can be efficiently performed can be provided.

Furthermore, according to the present invention, a superior MB-OFDM-based wireless communication apparatus and wireless communication method in which despreading of a spread signal or other reception processes can be efficiently performed according to a communication environment can be provided.

A wireless communication apparatus according to the present invention performs, as with a PLCP header portion of a Phy frame in MB-OFDM communication or a payload portion of an MMC in Wireless USB, when receiving data to be sent and received at a low data rate regardless of the communication environment by performing a spreading process over the frequency domain and the time domain, the on/off switching of a despreading process of a spread signal or other signal processes according to a communication environment, whereby an efficient reception process with reduced power consumption can be realized.

Other objects, features, or advantages of the present invention will become apparent from a more detailed description with reference to the following embodiment of the present invention or the accompanying drawings.

### Brief Description of Drawings

[Fig. 1] Fig. 1 is a diagram schematically showing a hardware configuration of an MB-OFDM receiver according to an embodiment of the present invention.
[Fig. 2] Fig. 2 is a diagram showing an internal structure of a despreading circuit 18.
[Fig. 3] Fig. 3 is a diagram schematically showing an equivalent circuit for block selection including a combination of an on/off switching unit 17 and the despreading circuit 18.
[Fig. 4] Fig. 4 is a flowchart showing a reception process procedure of a spread signal, which is performed in the receiver shown in Fig. 1.
[Fig. 5] Fig. 5 is a flowchart showing a specific procedure of a block selection process.
[Fig. 6] Fig. 6 is a diagram showing an example of channel estimation results of OFDM symbols F1 and F2 over which data A is transmitted.
[Fig. 7] Fig. 7 is a diagram showing an example of the operation of an enable control circuit 21 in the case of the channel estimation results shown in Fig. 6.
[Fig. 8] Fig. 8 is a diagram showing an example of channel estimation results of OFDM symbols F1 and F2 over which data A is transmitted.
[Fig. 9] Fig. 9 is a diagram showing an example of the operation of the enable control circuit 21 in the case of the channel estimation results shown in Fig. 8.
[Fig. 10] Fig. 10 is a diagram showing an example of channel estimation results of OFDM symbols F1 and F2 over which data A is transmitted.
[Fig. 11] Fig. 11 is a diagram showing an example of the operation of the enable control circuit 21 in the case of the channel estimation results shown in Fig. 10.
[Fig. 12] Fig. 12 is a diagram showing a manner in which data to be sent is placed on a two-dimensional space determined by a frequency domain direction and a time domain direction using a spreading scheme.
[Fig. 13] Fig. 13 is a diagram showing a format of a packet (Phy frame). Explanation of Reference Numerals

11 antenna, 12 RF processing unit, 13 AD converter, 14 FFT, 15 channel estimation and SNR estimation unit, 16 channel correction circuit, 18 despreading circuit, 19 deinterleaver, 20 decoder, 21 enable control circuit

### Best Mode for Carrying Out the Invention

The present invention relates to a wireless communication apparatus that performs UWB communication that employs an OFDM modulation scheme, and specifically to an MB-OFDM-based communication apparatus in which a band of 3.1 GHz to 10.6 GHz, which was specified by the FCC, is divided into a plurality of subbands each having a bandwidth of 528 MHz and in which frequency hopping (FH) is performed between the subbands. An embodiment of the present invention will be described in detail hereinafter with reference to the drawings.

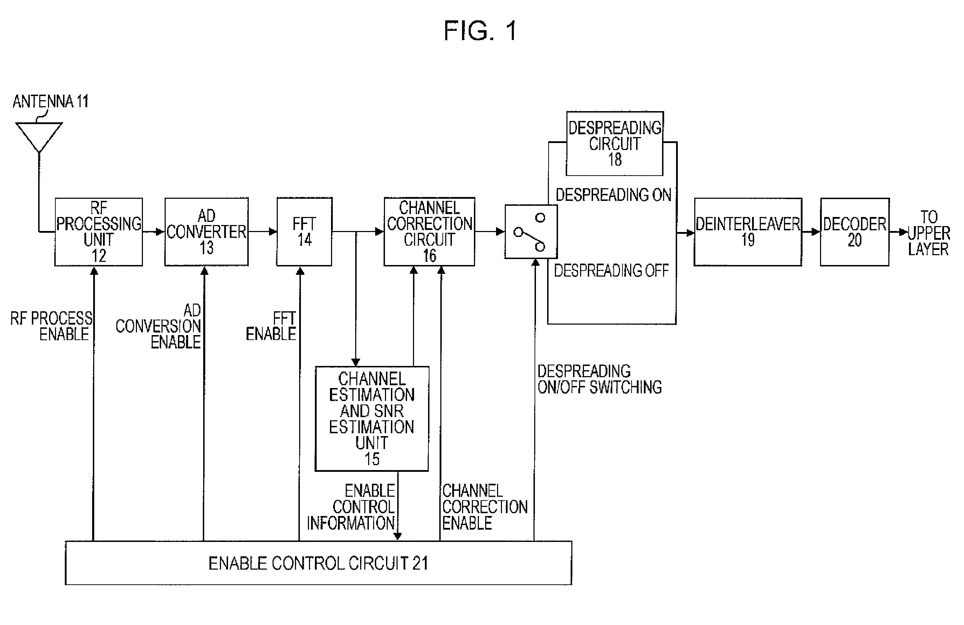

Fig. 1 schematically shows a hardware configuration of an MB-OFDM receiver according to an embodiment of the present invention. It is assumed that, as shown in Fig. 12, a signal received by this receiver has been subjected to a spreading process of transmission data over the frequency domain and the time domain.

In an RF processing unit 12, an RF signal received by an antenna 11 is subjected to a frequency synthesis process using a mixer (not shown) and is then down-converted into an analog baseband signal. Further, an unwanted component other than a desired signal is removed using a bandpass filter (BPF) (not shown) and the rest is amplified by a variable gain amplifier (VGA) (not shown). Then, an AD converter 13 performs AD conversion on the baseband signal at a predetermined sampling rate. An FFT 14 applies a Fourier transform to the digital baseband signal after being subjected to AD conversion to generate sub-carriers arranged in a frequency range.

A channel estimation and SNR estimation unit 15 multiplies a preamble received signal after being subjected to FFT with a known training sequence to perform channel estimation and SNR estimation. A channel estimation and SNR estimation method itself is not directly related to the gist of the present invention, and a detailed description thereof is thus omitted.

In a channel correction circuit 16, channel correction processes such as equalization processing, phase tracking, and residual frequency offset correction are performed. A channel correction method itself is not directly related to the gist of the present invention, and a detailed description thereof is thus omitted.

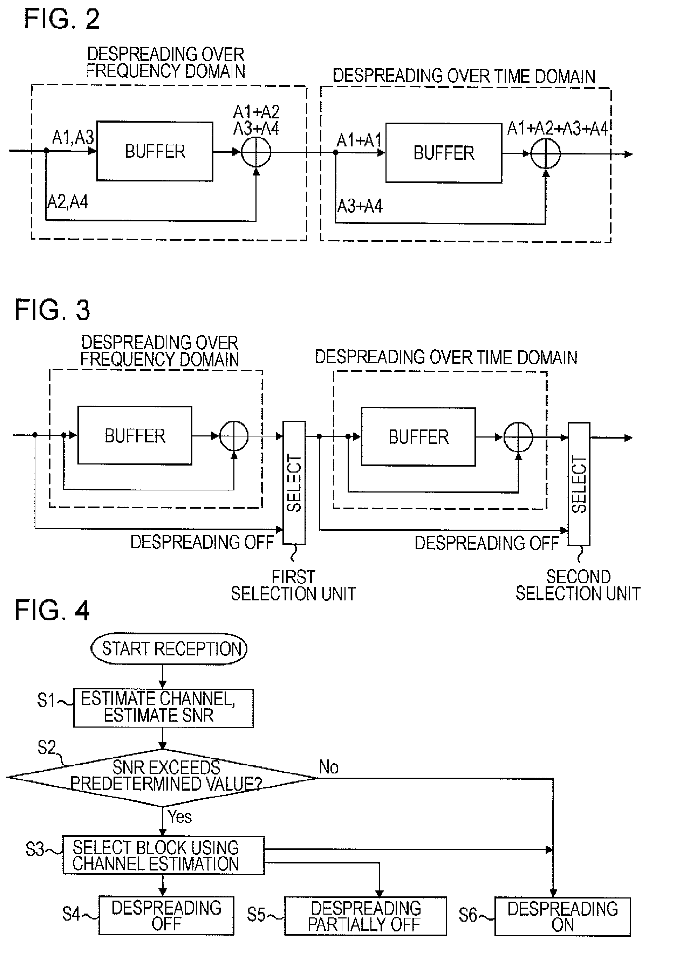

A despreading circuit 18 subjects the received signal spread over the frequency domain and the time domain to despreading processes over the frequency domain and the time domain. Fig. 2 schematically shows an internal structure of the despreading circuit 18. Provided that a description regarding the transmission data A shown in Fig. 12 is given, the data blocks A1 and A2 are combined and the data blocks A3 and A4 are combined, wherein the data blocks A1 and A2 have been spread over the frequency domain (or are transmitted within one symbol) and the data blocks A3 and A4 have been spread over the frequency domain (or are transmitted within one symbol). And the despreading process over the frequency domain is performed. Subsequently, the data blocks (A1 + A2) and (A3 + A4) that have been spread over the time domain (or are transmitted over two consecutive symbols) are combined. Thus, the despreading process over the time domain is performed.

A deinterleaver 19 performs a deinterleaving process regarding interleaving performed on the transmitter side (not shown). Then, a decoder 20 demodulates the phase and amplitude of the individual sub-carriers, and also decodes the individual sub-carriers from signal points on the phase space to the original signal sequence. The decoder 20 passes the obtained data to an upper layer (not shown).

For example, it is specified that a PLCP header portion of a Phy frame in MB-OFDM communication or a payload portion of an MMC in Wireless USB be subjected to frequency domain spreading and time domain spreading regardless of the communication environment. In a good communication environment, a receiver performs a reception and despreading process of a spread signal although it is possible to perform a reception process with data at one time, resulting in power consumption being increased more than necessary (described above).

In a receiver according to the present embodiment, on the other hand, an enable control circuit 21 is configured to receive, as enable-control information, an estimation result obtained in the channel estimation and SNR estimation unit 15 to select turning on/off of despreading over the frequency domain and despreading over the time domain. That is, when an estimated SNR value exceeds a certain value, a block selection processing flow for turning off the despreading is started, and an on/off switching signal is output to an on/off switching unit 17. By terminating an unnecessary despreading process, power consumption can be reduced.

While Fig. 2 shows an internal structure of the despreading circuit 18, Fig. 3 schematically shows an equivalent circuit for block selection including a combination of the on/off switching unit 17 and the despreading circuit 18. A description regarding the transmission data A shown in Fig. 12 will be given hereinafter.

When a first selection unit turns off the despreading over the frequency domain, only a selected one of the first half and second half received data blocks is output from each OFDM symbol.

Further, when a second selection unit turns off the despreading over the time domain, only the selected data block of the OFDM symbol (or the data block despread over the frequency domain within the OFDM symbol) is output.

According to this configuration, the operation of turning on/off the despreading process over the frequency domain and the operation of turning on/off the despreading process over the time domain can be independently controlled.

The enable control circuit 21 further has an enable signal for starting and terminating the circuit operation of each of the RF processing unit 12, the AD converter 13, the FFT 14, and the channel correction circuit 16. Then, in accordance with the block selection process described above, for a data block for which the despreading process has been terminated, the operation of a digital processing circuit portion such as the RF processing unit 12, the AD converter 13, the FFT 14, or the channel correction circuit 16 is also terminated. Thus, the effects of low power consumption can be further improved.

Fig. 4 shows, in the form of a flowchart, a procedure of performing a reception process of a spread signal, which is performed in the receiver shown in Fig. 1.

The channel estimation and SNR estimation unit 15 performs channel estimation and SNR estimation on an OFDM symbol divided into sub-carriers of a frequency range using FFT (step S1). The enable control circuit 21 checks the necessity of the despreading process on the basis of the SNR estimation result (step S2).

If the SNR is lower than a predetermined value (No in step S2), in order to achieve an improvement in the SNR, it is determined that the despreading process is necessary for all blocks that have been two-dimensionally spread over the frequency domain and the time domain, and the despreading circuit 18 is turned on (step S6).

When the SNR exceeds the predetermined value (Yes in step S2), on the other hand, it can be determined that the despreading process is not necessary for all the blocks. In this case, a block selection flow for further selecting a block for which the decoding process or the spreading process is performed on the basis of a channel estimation result of each of the blocks is started (step S3).

In this block selection process, first, it is discriminated whether or not a block with high channel quality for which the decoding process is possible without despreading is present among a plurality of blocks over which the same data has been spread. Then, if a block with high channel quality is present, the despreading circuit 18 is turned off and only one block having high channel quality is subjected to the decoding process in the decoding unit (step S4).

Further, if a block with high channel quality for which the decoding process is possible without despreading is not present, it is subsequently discriminated whether or not a set of blocks for which the decoding process is possible by despreading only a predetermined number of blocks smaller than the total number of spread blocks is present. In a case where it is possible to sufficiently improve the SNR by despreading only some of the blocks, the despreading process over the frequency domain or time domain can be partially turned off (step S5).

Moreover, in a case where, although the SNR exceeds the predetermined value, it is determined, with consideration of the channel estimation result, that the despreading process is necessary for all the blocks that have been two-dimensionally spread over the frequency domain and the time domain, the despreading circuit 18 is turned on (step S6).

As shown in Fig. 12, in a case where the same data is sent a plurality of times using a plurality of blocks on a two-dimensional space determined by the frequency domain and the time domain, due to different bands being used, individual blocks suffer from different phasing effects. In the block selection process in step S3, therefore, if at least one block that has high channel quality and that completely requires no despreading process is present, this block may only be selected. Further, in a case where the channel quality is not so high but despreading together with another block would sufficiently improve the SNR, the despreading process may be performed using only those some blocks.

Then, in a time zone in which a block for which the despreading process has been terminated by block selection is received, the receiver also terminates the operation of the RF analog processing unit 12 or the AD converter 13 or a digital processing circuit portion such as the FFT 14 or the channel correction circuit 16. Thus, the effects of lower power consumption can further be improved. For example, with regard to an OFDM symbol for which the decoding process is not performed, the operation of the FFT 14 or the channel correction circuit 16 can be terminated. Moreover, with regard to a block portion for which the decoding process or the despreading process is not performed within an OFDM symbol, the channel correction circuit 16 can be terminated.

In addition, when the despreading process is terminated for some of a plurality of blocks over which the same data has been spread, the despreading process over the frequency domain is preferentially performed. Thus, FFT can be efficiently terminated with regard to a spread signal over the time domain for which despreading is not performed, and the low-power-consumption effects can be improved.

In the case of the spreading scheme as shown in Fig. 12, if two blocks in an OFDM symbol have good channel estimation results and the decoding process is possible by subjecting only those blocks to the despreading process to improve the SNR, a block selection operation in which despreading over the frequency domain is turned on while despreading over the time domain is turned off is performed. In such a case, the operation of the FFT and the channel correction circuit can be terminated in a time zone in which an OFDM symbol for which the despreading process is not performed is received, and higher low-power-consumption effects can be obtained.

On the other hand, in a case where at least one of blocks in an OFDM symbol has a bad channel estimation result and sufficient improvement in the SNR is not expected even if only the blocks in that OFDM symbol are subjected to the despreading process, a block having a channel estimation result indicating that the decoding process is possible by performing despreading together with some other blocks is searched for up to a subsequent FFT-output OFDM symbol. Then, some blocks satisfying this channel estimation result are subjected to the despreading process between those OFDM symbols and are then subjected to the decoding process. This corresponds to a block selection operation in which despreading over the frequency domain is turned off while despreading over the time domain is turned on. In this case, it is necessary to extract a block to be used for despreading from the respective OFDM symbols. Thus, FFT cannot be terminated. However, in a time zone in which a block for which the despreading process is not performed is received within each OFDM symbol, the operation of the channel correction circuit can be terminated.

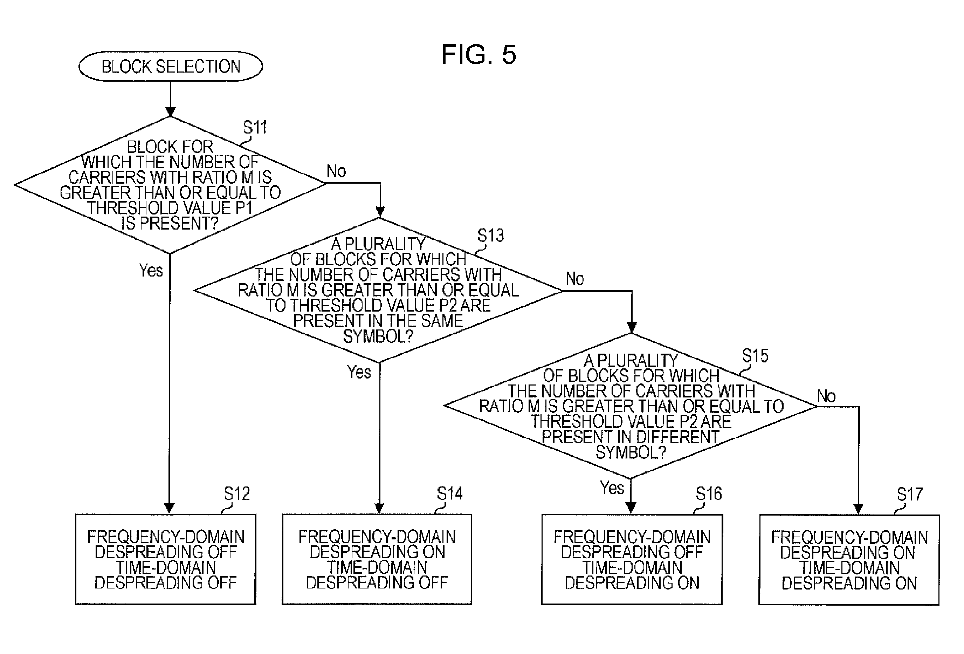

Fig. 5 shows, in the form of a flowchart, a specific procedure of a block selection process, which is started when the SNR of a received signal is lower than a predetermined value.

When the block selection process starts, first, it is discriminated whether or not a block having a channel estimation result indicating that the decoding process is possible without despreading is present among blocks included in an FFT-output OFDM symbol (step S11).

For example, for each block in an FFT-output OFDM symbol, based on whether or not a channel estimation result indicates that the ratio of sub-carriers exceeding a first threshold value P1 is greater than or equal to a predetermined value M, it can be determined whether or not the decoding process is possible without despreading.

Then, if a block having a good channel estimation result is present in the FFT-output OFDM symbol (Yes in step S11), the despreading process is terminated and only this block is subjected to the decoding process (step S12). Performing a decoding process on only one block means that the despreading processes over both the frequency domain and time domain are terminated.

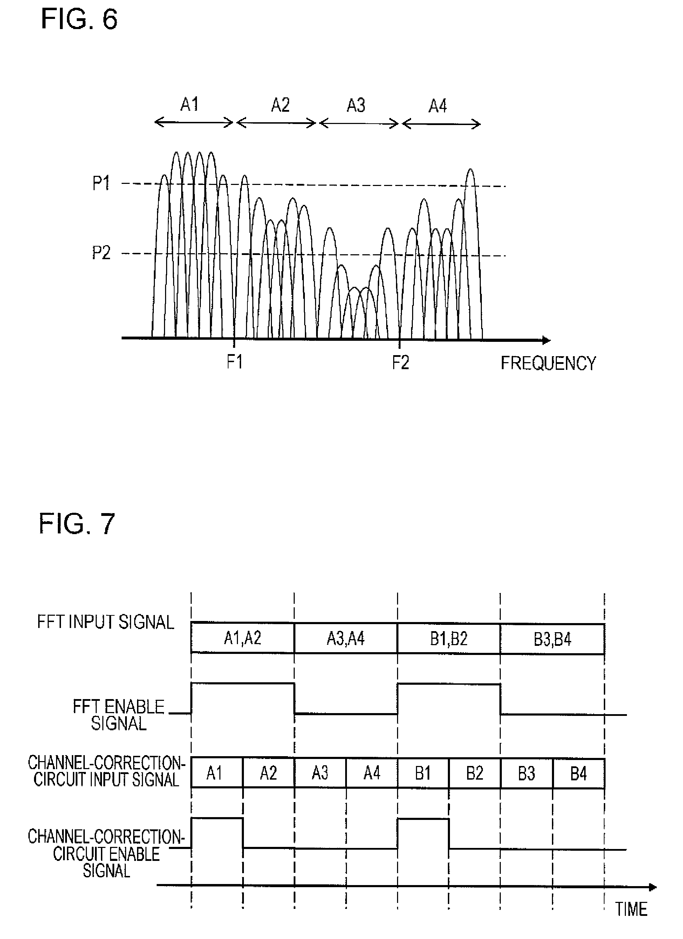

For example, in a case where OFDM symbols F1 and F2 over which data A is transmitted have channel estimation results as shown in Fig. 6, in a block A1, a channel estimation result indicates that the ratio of sub-carriers exceeding the first threshold value P1 is greater than or equal to the predetermined value M and it can thus be found that the decoding process is possible without despreading. Fig. 7 shows an example of the operation of the enable control circuit 21 in this case. Only the block A1 is subjected to a reception process while it is not necessary to receive other blocks A2 to A4. Thus, the enable control circuit 21 is only required to enable the FFT 14 only in a time zone in which the one OFDM symbol F1 is received and also to enable the channel correction circuit 16 only in a time zone in which the block A1 in this FFT output is received.

If a block for which the decoding process is possible without despreading is not present in the FFT-output OFDM symbol (No in step S11), subsequently, it is discriminated whether or not a channel estimation result indicating that the decoding process is possible by despreading each of the blocks in the OFDM symbol has been obtained (step S13).

For example, in a case where a plurality of blocks each for which the ratio of sub-carriers exceeding a second threshold value P2 that is lower than the first threshold value P1 is greater than or equal to the predetermined value M are present in the FFT-output OFDM symbol, it can be determined that the decoding process is possible if only the blocks within that OFDM symbol is subjected to the despreading process to achieve an improvement in SNR.

Then, if the decoding process is possible by only performing the despreading process within an OFDM symbol, the blocks within that OFDM symbol are subjected to the despreading process and then to the decoding process (step S14). This corresponds to a block selection operation in which despreading over the frequency domain is turned on while despreading over the time domain is turned off. In such a case, with regard to an OFDM symbol for which the despreading process is not performed, the operation of the FFT and the channel correction circuit can be terminated.

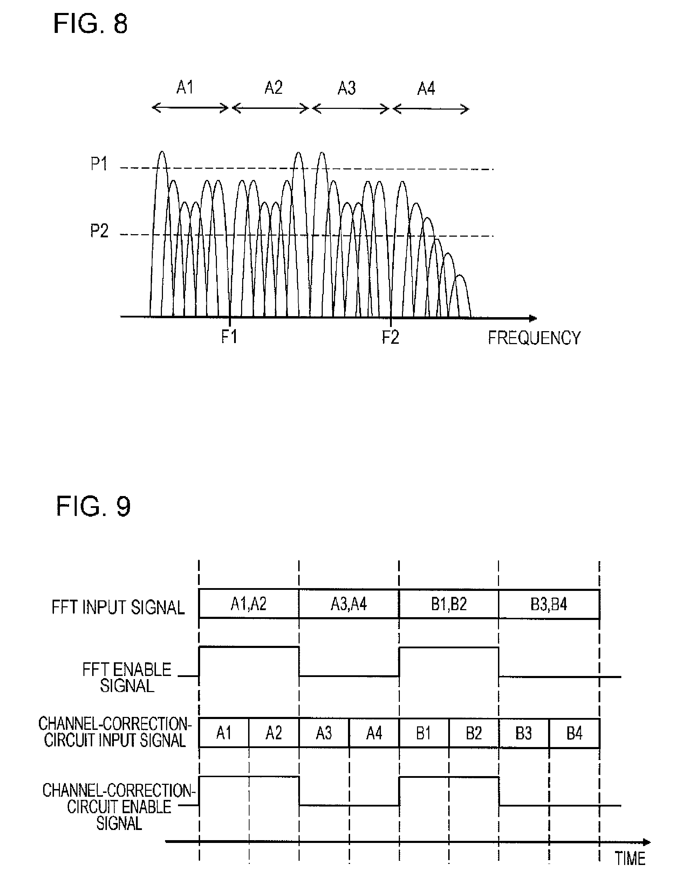

For example, in a case where OFDM symbols F1 and F2 over which data A is transmitted have channel estimation results as shown in Fig. 8, a block A1 or A2 cannot be decoded without being despread. However, the channel estimation results of those blocks indicate that the ratio of sub-carriers exceeding the second threshold value P2 is greater than or equal to the predetermined value M, and it can thus be found that the decoding process is possible by only performing the despreading process within the OFDM symbol F1. Fig. 9 shows an example of the operation of the enable control circuit 21 in this case. Only the one OFDM symbols F1 is subjected to a reception process while it is not necessary to receive the OFDM symbol F2. Thus, the enable control circuit 21 is only required to enable the FFT 14 and the channel correction circuit 16 only in a time zone in which the one OFDM symbol F1 is received.

Further, in a case where at least one of the blocks in the FFT-output OFDM symbol has a bad channel estimation result and sufficient improvement in the SNR is not expected even if only the blocks in that OFDM symbol are subjected to the despreading process (No in step S13), it is checked whether or not a block having a channel estimation result indicating that the decoding process is possible by performing despreading together with some other blocks is present up to a subsequently FFT-output OFDM symbol (step S15). Specifically, in a subsequent OFDM symbol over which the same data has been spread, the presence of a block for which the ratio of sub-carriers exceeding the second threshold value P2 is greater than or equal to the predetermined value M is confirmed.

Then, in a case where a block satisfying the channel estimation result is successfully found in the different OFDM symbol (Yes in step S15), only those blocks are subjected to the despreading process and then to the decoding process (step S16). This corresponds to a block selection operation in which despreading over the frequency domain is turned off while despreading over the time domain is turned on. In this case, it is necessary to collect blocks to be used for despreading from the respective OFDM symbols. Thus, FFT cannot be terminated. With regard to a block for which the despreading process is not performed, however, the operation of the channel correction circuit can be terminated.

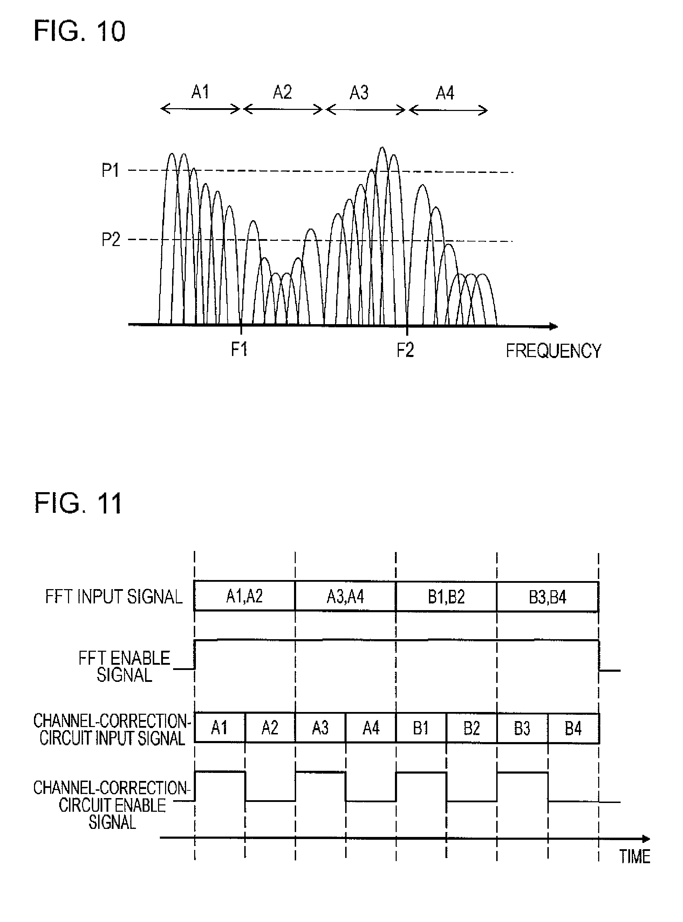

For example, in a case where OFDM symbols F1 and F2 over which data A is transmitted have channel estimation results as shown in Fig. 10, the OFDM symbols F1 and F2 cannot be decoded even if only the blocks within the symbols are despread. However, the channel estimation results of blocks A1 and A3 included in the respective symbols indicate that the ratio of sub-carriers exceeding the second threshold value P2 is greater than or equal to the predetermined value M, and it can thus be found that the decoding process is possible by despreading those blocks over the OFDM symbols. Fig. 11 shows an example of the operation of the enable control circuit 21 in this case. Since it is necessary to perform a reception process on both the OFDM symbols F1 and F2, the enable control circuit 21 continuously enables the FFT 14. Within the respective symbols, however, it is only required to enable the channel correction circuit 16 only in a time zone in which the blocks A1 and A3 are received.

Further, in the block selection flow, in a case where a block having a channel estimation result indicating that the ratio of sub-carriers exceeding the second threshold value P2 is greater than or equal to the predetermined value M cannot be extracted within a block or between blocks (No in step S15), it is determined that the despreading process is necessary for all the blocks that have been two-dimensionally spread over the frequency domain and the time domain. The despreading circuit 18 is not terminated, and the enable control circuit 21 continuously enables the FFT 14 and the channel correction circuit 16 for all the time (step S17).

Accordingly, in a case where the SNR of a received signal is greater than or equal to a predetermined value, a block to be received is selected based on a channel estimation value. An unselected block is not received, whereby a receiving circuit can be terminated in a time zone of that block. Moreover, this termination allows the circuits before despreading to be terminated. As described above, the enable control circuit 21 may only be required to terminate a digital circuit such as the FFT 14 or the channel correction circuit 16. If an analog circuit such as the RF processing circuit 12 or the AD converter 13 is also terminated, a further reduction in power consumption can be achieved.

### Industrial Applicability

The present invention has been described in detail with reference to a specific embodiment thereof. However, it is obvious that modifications or alterations can be made to the embodiment by persons skilled in the art without departing from the gist of the present invention.

In this description, an embodiment in which the present invention is applied to an MB-OFDM communication scheme for performing OFDM_UWB communication has been primarily described. However, the gist of the present invention is not to be limited thereto. Even in a communication system that performs a spreading process over either the frequency domain or the time domain or a communication system that performs a data spreading process over any other domain, with the application of the present invention, a receiver would adaptively terminate a despreading process or the operation of a receiving circuit on the basis of an SNR or channel estimation result to achieve a reduction in power consumption according to a communication environment.

In summary, the present invention has been disclosed in the form of illustrative examples, and is not to be construed as limiting the contents of this description. In order to determine the gist of the present invention, the description of the claims should be taken into account.

## Claims

1. A wireless communication apparatus that performs a reception process of a transmission signal in which data to be sent was spread into a plurality of blocks over a frequency domain or a time domain, **characterized by** comprising:
a reception processing unit that performs a reception process of a spread signal;
a channel estimation and SNR estimation unit that performs channel estimation and SNR estimation of a received signal;
a despreading unit that performs despreading of the received signal;
a decoding unit that performs a decoding process of the received signal which has passed through the despreading unit; and
a control unit that controls operation of the despreading unit and the reception processing unit on the basis of channel estimation and SNR estimation results.

2. The wireless communication apparatus according to Claim 1, **characterized in that** the control unit determines, based on the SNR estimation result, whether or not a despreading process of the received signal by using the despreading unit is necessary, and
when it is determined that the despreading process is not necessary for all of the blocks, the control unit selects a block for which the decoding process or the despreading process is performed on the basis of a channel estimation result of each of the blocks.

3. The wireless communication apparatus according to Claim 1, **characterized in that** the control unit discriminates whether or not a block having a channel estimation result indicating that the decoding process is possible without despreading is present among a plurality of blocks over which the same data has been spread, and, when the block is present, the control unit terminates the despreading process in the despreading unit and then causes only the block to be subjected to the decoding process in the decoding unit.

4. The wireless communication apparatus according to Claim 3, **characterized in that** the transmission signal has been OFDM-modulated, and
the control unit determines, for each of the blocks after being OFDM-demodulated, based on whether or not a channel estimation result indicates the number (or the ratio) of sub-carriers exceeding a first threshold value is greater than or equal to a predetermined value, whether or not the decoding process is possible without despreading.

5. The wireless communication apparatus according to Claim 3, **characterized in that** when a block having a channel estimation result indicating that the decoding process is possible without despreading is not present, the control unit discriminates whether or not a block having a channel estimation result indicating that the decoding process is possible by performing despreading together with some other blocks is present, and, when the block is present, the control unit causes the decoding process in the decoding unit to be performed after subjecting only the some blocks to the despreading process.

6. The wireless communication apparatus according to Claim 5, **characterized in that** the transmission signal has been OFDM-modulated, and
the control unit extracts some blocks for which the number (or the ratio) of sub-carriers exceeding a second threshold value that is lower than the first threshold value is greater than or equal to the predetermined value from among the plurality of blocks in which the same data has been spread, and causes the decoding process in the decoding unit to be performed after subjecting only the some blocks to the despreading process.

7. The wireless communication apparatus according to Claim 6, **characterized in that** the data to be sent has been spread over the frequency domain and the time domain, and
in a case where only some of the plurality of blocks over which the same data has been spread are despread, the control unit preferentially performs the despreading process over the frequency domain.

8. The wireless communication apparatus according to Claim 7, **characterized in that** one OFDM symbol is formed of a plurality of blocks, and spreading over the frequency domain has been performed by transmitting the same data using all the blocks within the OFDM symbol while spreading over the time domain has been performed by transmitting the same data using two or more OFDM symbols,
the control unit discriminates whether or not each block within an OFDM symbol has a channel estimation result indicating that the decoding process is possible by performing despreading together with another block within the same symbol, and
when a plurality of blocks each having the channel estimation result are present in the same symbol, the control unit causes the decoding process in the decoding unit to be performed after subjecting the blocks in the same symbol to the despreading process.

9. The wireless communication apparatus according to Claim 8, **characterized in that** the reception processing unit includes an FFT that OFDM-demodulates the received signal, and a channel correction circuit, and
the control unit terminates operation of the FFT and channel correction circuit with regard to an OFDM symbol for which the despreading process is not performed.

10. The wireless communication apparatus according to Claim 8, **characterized in that,** when a plurality of blocks each having the channel estimation result are not present in one OFDM symbol, the control unit extracts a block having a channel estimation result indicating that the decoding process is possible by performing despreading together with some other blocks within a plurality of OFDM symbols over which the same data as data of the one OFDM symbol has been spread, and causes the decoding process in the decoding unit to be performed after subjecting the block satisfying the channel estimation result to the despreading process.

11. The wireless communication apparatus according to Claim 10, **characterized in that** the reception processing unit includes an FFT that OFDM-demodulates the received signal, and a channel correction circuit, and
the control unit terminates operation of the channel correction circuit with regard to a block for which the despreading process is not performed.

12. A wireless communication method for performing a reception process of a transmission signal in which data to be sent was spread into a plurality of blocks over a frequency domain or a time domain, **characterized by** comprising:
a reception processing step of performing a reception process of a spread signal;
a channel estimation and SNR estimation step of performing channel estimation and SNR estimation of a received signal;
a determination step of determining, based on an SNR estimation result, whether or not a despreading process of the received signal is necessary;
a block selection step of selecting, when it is determined that the despreading process is not necessary for all the blocks, a block for which the decoding process or the despreading process is performed on the basis of a channel estimation result of each of the blocks;
a despreading processing step of performing despreading on the block selected to be subjected to the despreading process; and
a decoding step of decoding a signal of a block that is selected to be subjected to the decoding process without despreading or a signal obtained after a plurality of blocks that are selected to be despread have been despread.
